# EUROPEAN PATENT APPLICATION

(11) **EP 2 290 492 A1**
(43) Date of publication of application: **02.03.2011**
(21) Application number: 09010806.9
(22) Date of filing: 24.08.2009
(51) Int. Cl.: G05D 23/02

(54) **Throttle valve, in particular circulation throttle valve**

(71) Applicant: Honeywell Technologies Sarl, 1110 Morges (CH)
(72) Inventor: Novotny, Marek, 08222 Sarisse Michalany (SK)
(74) Representative: Graefe, Jörg

(57) **Abstract**

A throttle valve (1) for fluids, in particular a circulation throttle valve in hot water supplies is disclosed, comprising an inlet, an outlet, at least one valve seat (110, 111) between the inlet and the outlet, a valve piston means (20) biased by a spring (30) and interacting with the valve seat (110, 111) to set a flow rate, and a thermosensitive element (60), wherein the thermosensitive element (60) causes a movement of the valve piston means (20) in reaction to the temperature of the fluid, wherein the throttle valve (1) comprises a control element (40), that is coupled with the thermosensitive element (60), in such a way that the control element (40) moves as a function of the temperature sensed by the thermosensitive element (60), the control element (40) has at least one contour (41, 42, 43, 44) and the valve piston means (20) has a projection (24), wherein the projection contacts a part (41, 42, 43, 44) of the contour (41, 42, 43, 44), the tension of the springs (30) biasing the valve piston means (20) keeps the projection (24) in contact with the part (41, 42, 43, 44) of the contour (41, 42, 43, 44), so that the projection (24) follows the contour (41, 42, 43, 44) as the control element (40) is moved.

## Description

Document EP 1 101 054 B1 discloses a throttle valve for use in hot water supplies. It can be used to control the flow rate as a function of the temperature of the water flowing through the valve. Up to a temperature of about 55°C the flow rate is at a maximum in order to supply as much water as possible to the taps of the hot water supply. At temperatures exceeding 55°C the throttle flow through the valve is reduced to prevent scalding at the taps fed by the hot water supply. At temperatures of about 70°C the valve enables a further flow for disinfection purposes. At temperatures of about 70°C and higher Legionella are eliminated. For further safety purposes the throttle valve closes again at temperatures higher than 73°C.

The opening of the valve at the above temperatures enables an automatically driven disinfecting routine during the night, which is started by heating the warm water boiler up to a temperature of 70°C.

A throttle valve of this type is known as "alwa kombi 4" which is produced and sold by the applicant.

It may sometimes occur in practice that the flow rate in the hot water supply is not sufficient for the valve to work as intended. This may result from an insufficient transport of heat from the hot water to the thermosensitive element. The thermosensitive element may thus not be able to sense the correct temperature of the water flowing through the valve. In those cases the kv value is too small. The "alwa kombi 4" is provided with a handle. With this handle the kv value may be adjusted within a certain range. The adjustment of the kv value always results in a change of all the temperature levels at which the valve closes or opens. In some cases this could be a disadvantage.

It is therefore an object of the present invention is to provide an improved throttle valve, which may be adjusted easily in such a way that it is possible to change the kv value for at least one temperature level at which the valve opens and closes while the kv value for the other temperature levels remains the same.

To solve this problem a throttle valve according to claim 1 is suggested. The throttle valve according to the invention comprises a control element that is coupled with the thermosensitive element, in such a way that the control element moves as a function of the temperature sensed by the thermosensitive element. The control element has a contour and the valve piston means has a projection, wherein the projection contacts a part of the contour. The tension of the springs biasing the valve piston means keeps the projection of the valve piston means in contact with the part of the contour, so that the projection follows the contour when the control element moves.

The part of the contour of the control element that is in contact with the projection of the valve piston changes in response to an expansion or a contraction of the thermosensitive element. This means that in the course of a change in temperature of the fluid flowing through the throttle valve the projection follows the contour of the control element. As a result the valve piston means and the valve seat set the passage for the flow of the fluid.

The kv value of the throttle valve at a certain temperature level of the fluid flowing through the valve is therefore predetermined by the contour of the control element. By exchanging the contour the kv value assigned to a temperature level can be changed.

In a rather simple version of the invention, the contour may be changed by replacing the control element with a control element having a different contour. In a more advanced version, the contour of the control element may be changed without exchanging the control element. This could be achieved by a control element that is provided with different contours. Each of these different contours could be brought into contact with the projection.

An angle formed by the direction of movement of the valve piston means and the direction of movement of the control element could be about 30° to 90°, in particular 90°.

The contour of the control element can be defined by a part of the control element forming a shoulder, a protruding part of the control element and/or a recessed part of the control element. The projection of the valve piston means contacts these parts forming the shoulder, the protruding part or the recessed part of the control element. Thus positions of the valve piston means relative to the valve seat are determined.

The protruding part could be a collar. The recessed part could be a neck.

A control element having different contours could be realized in such a way that the shoulder or one of the collars has steps arranged in the circumferential direction. The steps are arranged in a surface perpendicular to an axis. Advantageously the control element could be rotated around this axis.

The throttle valve could comprise a rotatable handle that is in torque-proof connection with the control element. By turning the handle the contour of the control element contacted by the projection of the valve piston means could be changed.

An example of the throttle valve could have a first part of the control element with a first diameter, a second part of the control element with a second diameter, a third part of the control element with a third diameter and a fourth part of the control element with a fourth diameter, with the first diameter being the smallest among the diameters, the second diameter being bigger than the third diameter, and the fourth diameter being the biggest of the diameters.

The control element could comprise sloped parts between the protruding parts and/or the recessed parts. The sloped parts could be conical.

The projection of the means contacting the contour of the control element could comprise a sloped part. The ratio of the transmission of the movement of the control element to the movement of the means is set by choosing the inclination of the sloped part of the projection and/or the sloped parts of the control element. It is an advantage of the invention, that the variation of the temperature and thus the movement of the control element can be transmitted with different transmission ratios to the valve piston means depending on the contour chosen for the transmission and depending on which part of the contour contacts the projection of the valve piston.

The projection of the valve piston means can be conical.

The throttle valve can comprise a housing with an inlet socket, a control socket and an outlet socket. The valve seat can be placed in the inlet socket and that the valve piston means is moveably arranged in the inlet socket. The thermosensitive element can be placed in the control socket and the control element can be moveably arranged in the control socket.

An example for a throttle valve according to the present invention is shown schematically in the figures.
- Fig. 1: shows a sectional drawing of the throttle valve,

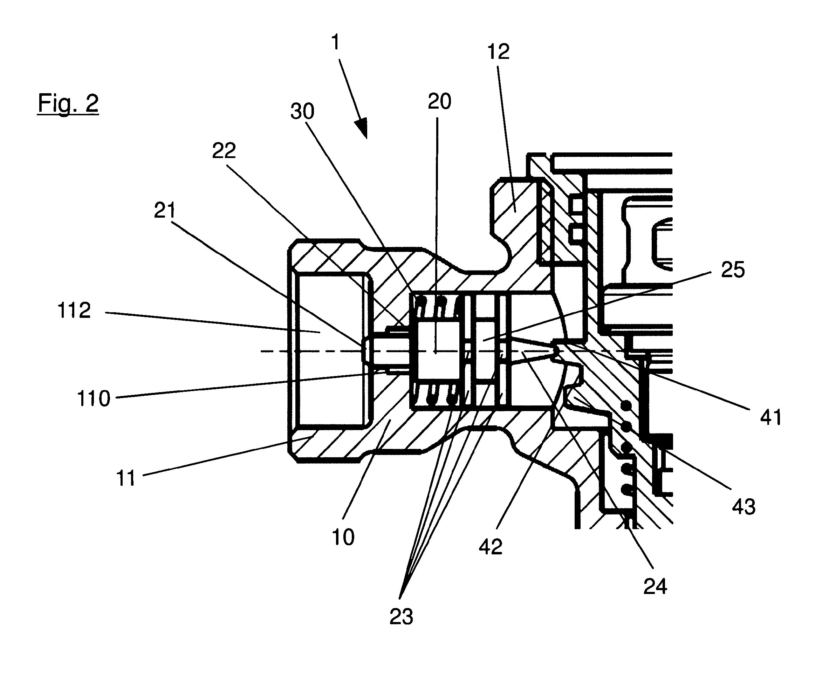

- Fig. 2: shows a detail of the throttle valve in a sectional drawing, with a projection contacting a first collar of a control element,
- Fig. 3: shows the detail of the throttle valve in a sectional drawing, with a projection contacting a neck of a control element,
- Fig. 4: shows the detail of the throttle valve in a sectional drawing, with a projection contacting a second collar of a control element,

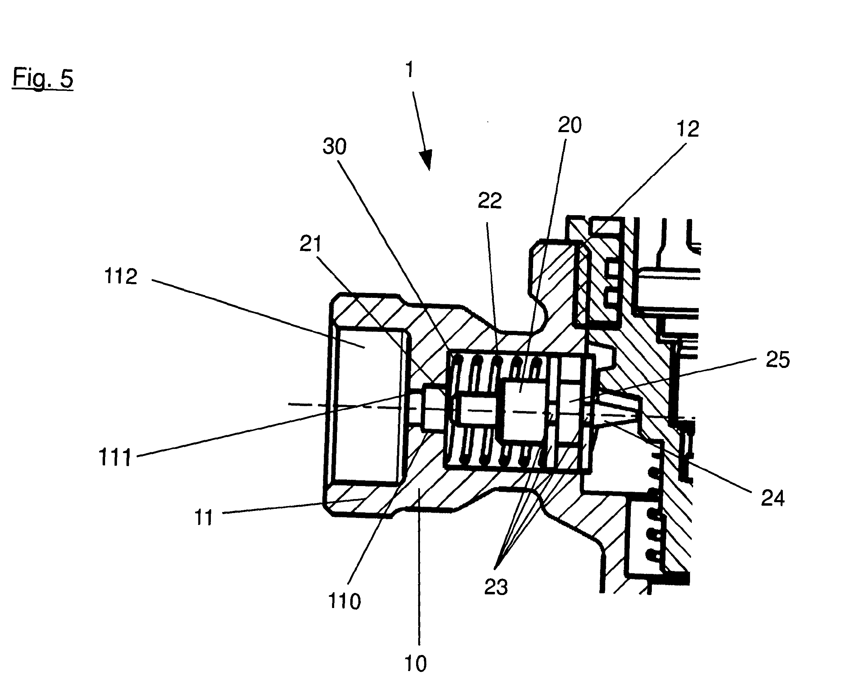

- Fig. 5: shows the detail of the throttle valve in a sectional drawing, with a projection contacting a shoulder of a control element, and

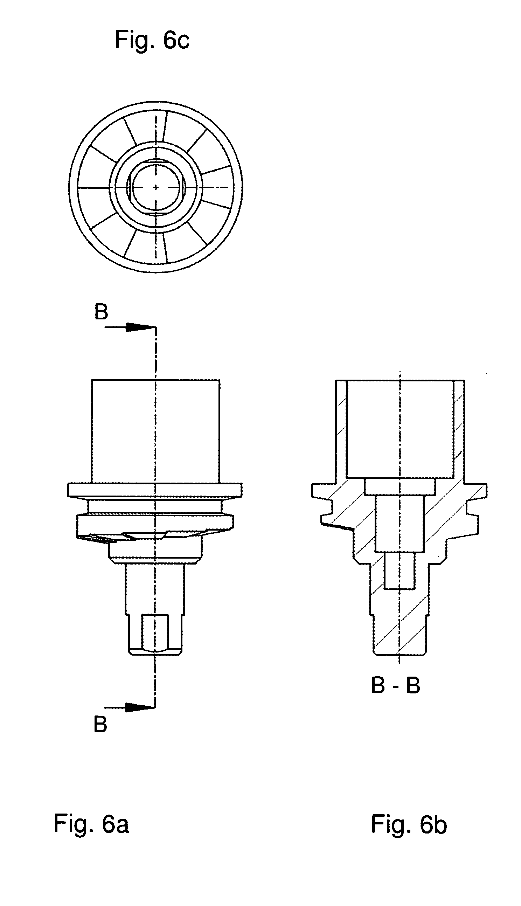

- Fig. 6: shows the control element in a side view (Fig. 6a), in a sectional drawing (Fig. 6b), and a bottom view (Fig. 6c).

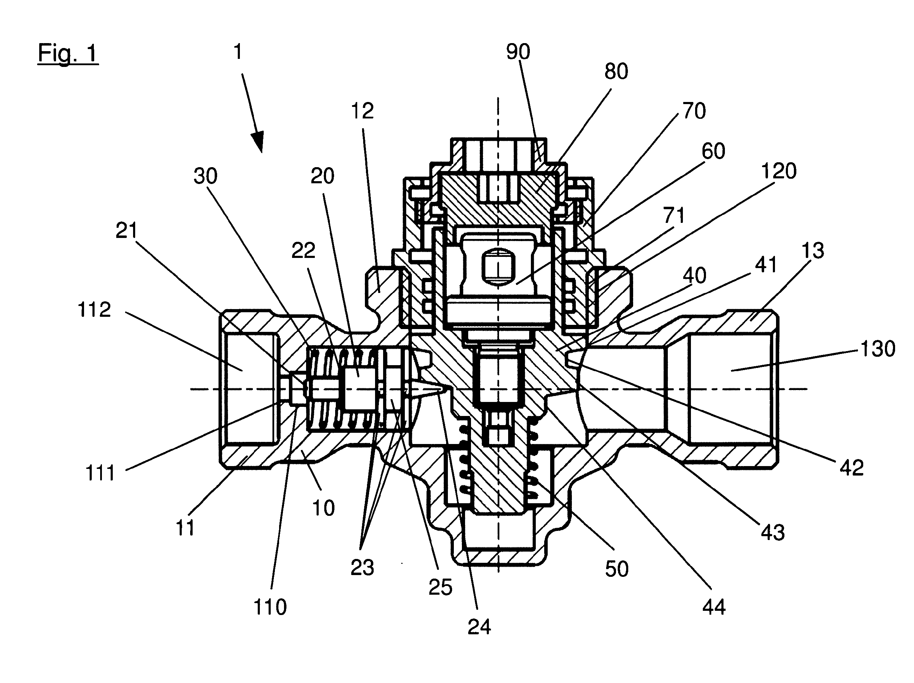

The throttle valve 1 shown in Fig. 1 comprises a housing 10 with an inlet socket 11, a control socket 12, and an outlet socket 13.

The inlet socket 11 as well as the outlet socket 13 have inside threads 112, 130 for connecting the socket 11, 13 with a conduit (not shown). The inlet socket 11 further comprises two valve seats 110, 111. A valve piston means 20 is arranged in the inlet socket 11 of the housing 10. The valve piston 20 is biased by a spring 30 which is supported by an annular projection of the inlet socket 11 comprising the valve seats 110, 111.

The valve piston means 20 comprises at a first end a pin 21 interacting with the valve seat 110. It further comprises a shoulder 22 interacting with the valve seat 111. The pin 21 and the valve seat 110 on the one hand and the shoulder 22 and the valve seat 111 on the other hand define an opening of the valve. By moving the valve piston means 20 in the inlet socket 11 the opening width of this opening may be adjusted. In a first extreme position of the valve piston means 20 the throttle valve 1 is closed. In another extreme position the throttle valve is open. Between these two positions several intermediate positions could be assumed by the valve piston means 20.

The valve piston means 20 may be guided by elements 23 in the inlet socket 11. These guiding means could be provided by arms extending from a core 25 of the valve piston means 20.

At a second end the valve piston means 20 comprises the projection 24. The projection has a conical form and a spike of the projection contacts a contour of the control element.

The control element 40 is arranged in the control socket 12 of the housing 10 of the throttle valve 1 and protrudes into a cavity in an area of the housing that is located between the inlet socket, the control socket, and the outlet socket. The control element is biased by a spring 50 that is supported by a wall of the housing 10 opposite the control socket 12. The spring 50 presses the control element against a thermosensitive element 60 arranged in the control socket 12. The thermosensitive element expands or contracts in response to the temperature of the fluid flowing through the throttle valve 1. The thermosensitive element 60 as well as the control element 40 is supported by a nut 70 that is releasably fixed to the control socket 12.

The control element is fixed in a torque-proof manner to a handle 80 that is rotatably connected to the control socket 12. It further comprises different contours arranged in the part of the element located in the cavity between the inlet socket, the control socket, and the outlet socket. The contours are defined by the shape of a first collar 41, a neck 42, a second collar 43, and a shoulder 44. The second collar 43 is provided with steps on its surface facing toward to the shoulder 44. Each of the contours comprises a part of the first collar 41, a part of the neck 42, a part of the second collar extending over one of the steps, and a part of the shoulder 44. The spike of the projection 24 contacts one of these contours. By turning the control element 40 or the handle 80 the contour contacted by the projection 24 can be changed. For turning the handle 80 a tool may be inserted into a recess of the handle 80.

In reaction to an expansion or contraction of the thermosensitive element 60 the control element 40 is moved axially. In the course of such a movement the projection 24 of the valve piston means 20 picks up the movement of the control element 40. The valve piston means 20 moves forward and backward depending on whether it is in contact with the first or second collar 41, 43, the neck 42 or the shoulder 44. The slopes between the collars, necks and shoulders in combination with the slope of the projection 20 determine the transmission ratio of the movement of the control element 40 to the movement of the valve piston means 20. In an area of the contour of the control element 40 without any change of the radius a change of the temperature does not lead to a movement of the valve piston means .

A second handle 90 may be turned to close the throttle valve 1 completely if it is not in use. During normal operation the second handle is fully open.

In operation the throttle valve 1 opens, reduces the flow or/and closes depending on the temperature of the fluid passing through the throttle valve 1 sensed by the thermosensitive element 60. At temperatures of more than about 72°C the throttle valve 1 is closed. The thermosensitive element 60 expands in response to the high temperature. The thermosensitive element 60 presses down the control element 40, so that the projection 24 of the valve piston means 20 contacts the first collar 41. When the projection 24 contacts the first collar 41 of the control element, the valve piston means is moved towards the valve seats 110, 111. The edges 21, 22 come into contact with the valve seats 110, 111 and close them. No fluid can pass through the valve, except for a very small fluid flow passing through a leakage opening (not shown) bypassing the valve seats.

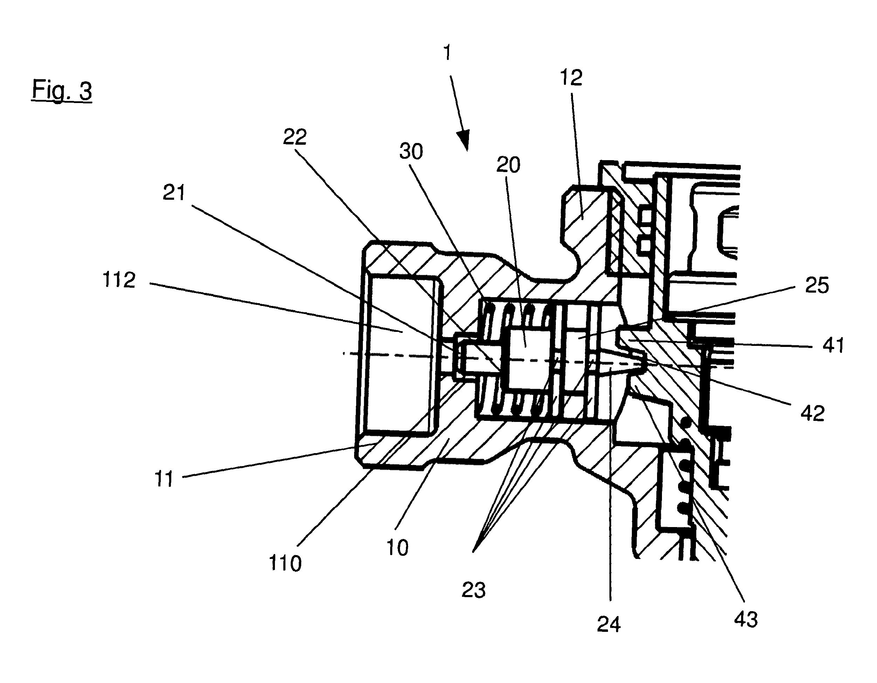

If the temperature of the fluid passing the leakage opening falls below 72°C, the thermosensitive element 60 contracts, followed by the control element 40 that is pressed against the thermosensitive element 60 by the spring 50. As the control element 40 moves, the projection 24 looses contact with the first collar 41 and jumps into the neck 42 due to the force applied to the valve piston means 20 by the spring 30 (Fig. 3). The edges 21, 22 disengage from the valve seats 110, 111 so that the fluid may flow through throttle valve 1 for disinfection purposes.

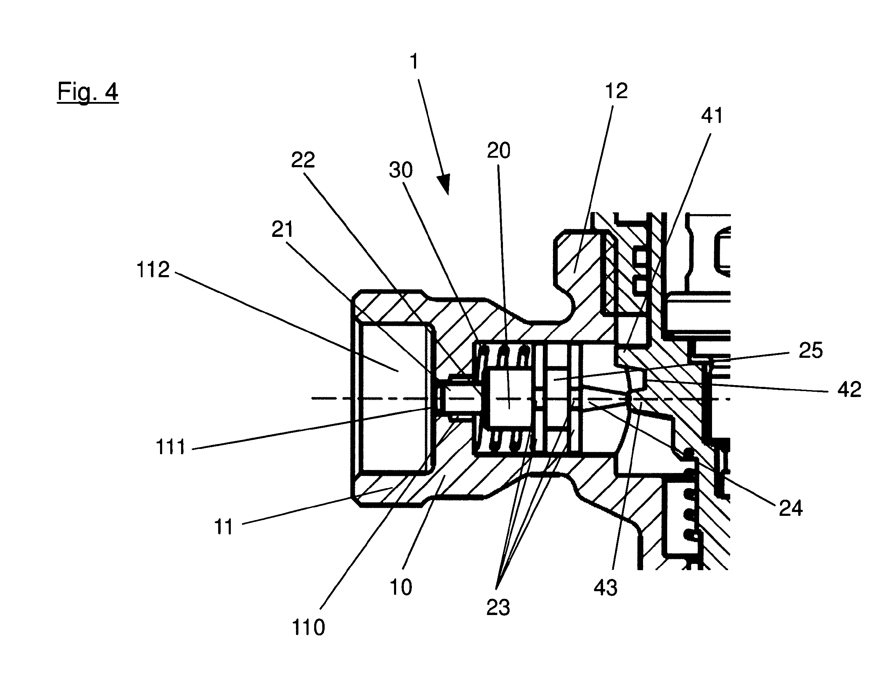

As the temperature of the fluid further falls, the contraction of the thermosensitive element 60 proceeds and the control element 40 moves further. Thus the projection 24 comes into contact with the second collar 43 (Fig. 4) which pushes the control valve means 20 against the force of the spring 30, and the opening between the edges 21, 22 and the valve seats 110, 111 becomes narrower. This leads to a reduced fluid flow through the throttle valve 1.

As the temperature falls even further and the control element moves even further upwards, the projection 24 arrives at a lower edge of the second collar 43 and jumps finally onto the shoulder 44. Depending on the rotational position of the control element 40 and due to the steps in the lower surface of the second collar 43 the projections reach this edge at higher temperatures or lower temperatures. This means that the projection jumps onto the shoulder at higher temperatures or at lower temperatures and the valve piston means 20 moves away from the valve seats 110, 111 at higher or lower temperatures. Therefore by turning the control element 40, a temperature range of about 50 to 55°C of the fluid flow may be adjusted without changing the fluid flows in other temperature ranges. Once the projection 24 contacts the shoulder 44 the throttle valve is fully opened.

## Claims

1. A throttle valve (1) for fluids, in particular a circulation throttle valve in hot water supplies, comprising an inlet, an outlet, at least one valve seat (110, 111) between the inlet and the outlet, a valve piston means (20) biased by a spring (30) and interacting with the valve seat (110, 111) to set a flow rate, and a thermosensitive element (60), wherein the thermosensitive element (60) causes a movement of the valve piston means (20) in reaction to the temperature of the fluid,
**characterized in that**
the throttle valve (1) comprises a control element (40), that is coupled with the thermosensitive element (60), in such a way that the control element (40) moves as a function of the temperature sensed by the thermosensitive element (60),
the control element (40) has at least one contour (41, 42, 43, 44), and the valve piston means (20) has a projection (24), wherein the projection contacts a part (41, 42, 43, 44) of the contour (41, 42, 43, 44),
the tension of the springs (30) .biasing the valve piston means (20) keeps the projection (24) in contact with the part (41, 42, 43, 44) of the contour (41, 42, 43, 44), so that the projection (24) follows the contour (41, 42, 43, 44) as the control element (40) is moved.

2. The throttle valve according to claim 1, **characterized in that** the angle formed by the direction of movement of the valve piston means (20) and the direction of movement of the control element (40) is about 30° to 90°, in particular 90°.

3. The throttle valve according to claim 1 or 2, **characterized in that** the contour (41, 42, 43, 44) of the control element (40) is defined by parts (41, 42, 43, 44) of the control element forming a shoulder (44), a protruding part of the control element (41, 43) and/or a recessed part (42) of the control element (40) .

4. The throttle valve according to claim 3, **characterized in that** the projection (24) of the valve piston means (20) contacts the part forming the shoulder (44), the protruding part (41, 43) or the recessed part (42) of the control element (40), and thus positions of the valve piston means (20) relative to the valve seat (110, 111) are determined.

5. The throttle valve according to claim 3 or 4, **characterized in that** the protruding part is a collar (41, 43) and/or the recessed part is a neck (42).

6. The throttle valve according to one of claims 3 to 4, **characterized in that** the shoulder(44), the collar (41, 43) and/or the neck (42) have steps arranged in succession in the circumferential direction.

7. The throttle valve according to claim 6, **characterized in that** the throttle valve (1) comprises a rotatable handle (80) that is in torque-proof connection with the control element (40).

8. The throttle valve according to claim 7, **characterized in that** the part of the contour (41, 42, 43, 44) of the control element (40) contacted by the projection (24) of the valve piston means (24) is changeable by rotating the handle (80).

9. The throttle valve according to one of claims 4 to 8, **characterized in that** a first part (41) of the control element (40) has a first diameter, a second part (42) of the control element (40) has a second diameter, a third part (43) of the control element (40) has a third diameter and a fourth part (44) of the control element (40) has a fourth diameter, with the first diameter being the biggest of the diameters, the second diameter being bigger than the third diameter, and the fourth diameter being the smallest of the diameters.

10. The throttle valve according to one of claims 3 to 9, **characterized in that** the control element (40) comprises sloped parts between the protruding parts (41, 43) and/or the recessed parts (42, 44).

11. The throttle valve according to claim 5 and 9, **characterized in that** the sloped parts are conical.

12. The throttle valve according to one of claims 1 to 11, **characterized in that** the throttle valve comprises a housing (10) with an inlet socket (11), a control socket (12) and an outlet socket (13).

13. The throttle valve according to claim 12, **characterized in that** the valve seat (110, 111) is arranged in the inlet socket (11) and that the valve piston means (20) is moveably arranged in the inlet socket (11).

14. The throttle valve according to claim 12 or 13, **characterized in that** the thermosensitive element (60) is arranged in the control socket (12) and the control element (40) is moveably arranged in the control socket (12).

15. The throttle valve according to one of claims 1 to 14, **characterized in that** the projection (24) of the valve piston means (20) is conical.

16. The throttle valve according to one of claims 1 to 14, chracterized in that the projection (24) of the valve piston means (20) has a rotatable ball.
